# EUROPÄISCHE PATENTANMELDUNG

(11) **EP 1 081 050 A1**
(43) Veröffentlichungstag der Anmeldung: **07.03.2001**
(21) Anmeldenummer: 00116995.2
(22) Anmeldetag: 30.12.1997
(51) Int. Cl.: B65C 11/00, G11B 23/40, G09F 3/10

(54) **Verbundetikette**

(30) Priorität: 31.12.1996 CH 320596
(62) Teilanmeldung aus: 97948675.0
(71) Anmelder: Dynosys AG, 9422 Staad (CH)
(72) Erfinder: Schwaller, Edwin, CH-5024 Küttingen (CH); Schwaller, André, CH-5012 Schönenwerd (CH)
(74) Vertreter: Patentanwälte Schaad, Balass, Menzl & Partner AG

(57) **Zusammenfassung**

Die Erfindung betrifft eine Verbundetikette (12) zum Kennzeichnen eines scheibenförmigen Artikels, insbesondere einer Compact Disk, umfassend ein flächenförmiges, flexibles Trägermaterial (12a;12d) sowie zumindest eine lösbar daran haftende, eine Ausnehmung (12k) aufweisende Etikette (12e) für eine Compact Disk, wobei das Trägermaterial (12a;12d) Schnitte oder Sollbruchlinien (12m) aufweist, welche in Umfangsrichtung der Etikette (12e) zumindest abschnittsweise über einen peripheren Rand (12o) der Etikette (12e) vorstehend verlaufen.

## Beschreibung

Die Erfindung betrifft eine Verbundetikette zum Kennzeichnen eines scheibenförmigen Artikels, insbesondere einer Compact Disk.

Aus der WO 96/05057 ist eine Vorrichtung zum möglichst zentrischen Aufkleben einer selbstklebenden Etikette auf eine Compact Disk bekannt. Ein zentriertes Aufkleben einer Etikette, auch Label genannt, auf eine Compact Disk, auch CD genannt, ist aus technischen Gründen äusserst wichtig. Eine CD dreht sich während des Leseprozesses mit einer sehr hohen Geschwindigkeit. Weist die CD eine Unwucht auf, so übertragen sich die dadurch verursachten, exzentrisch wirkenden Kräfte auf das Lesegerät, insbesondere auf die mechanischen Teile und den Lesekopf, was eine vorzeitige Abnutzung oder gar eine Beschädigung des Lesegerätes zur Folge hat. Daher ist die Etikette in einer möglichst exakt zentrischen Lage auf die Compact Disk aufzubringen. Die bekannte Vorrichtung weist den Nachteil auf, dass sie aus mehreren einzelnen Komponenten besteht, die jeweils manuell in einer bestimmten Reihenfolge zusammenzustellen und zu führen sind, was einerseits ein exaktes Zentrieren der Etikette bezüglich der CD erschwert, und andererseits Probleme beim Halten der Komponenten ergibt, weil die klebrige Oberfläche der positionierten Etikette das Lösen der Finger ohne Verrutschen der Etikette weitgehend verunmöglicht. Ein weiterer Nachteil ist darin zu sehen, dass sich die Etikette nach dem Ablösen der Trägerfolie und während der Positionierung, mittig aufbiegt und somit nicht vollständig flach liegend angeordnet ist. Zudem ist nicht auszuschliessen, dass die manuell geführte CD bezüglich der Etikette in einer leicht verkanteten Lage aufgelegt wird, so dass sich zum Beispiel zwischen der CD und der Etikette eingeschlossene Luftblasen bilden, oder die Etikette exzentrisch bezüglich der CD aufgeklebt wird.

Es ist Aufgabe der vorliegenden Erfindung eine Etikette für eine Compact Disk vorzuschlagen, welche ein einfaches und zuverlässiges Aufbringen derselben auf die Compact Disk erlaubt.

Die Aufgabe wird gelöst mit einer Verbundetikette aufweisend die Merkmale gemäss Anspruch 1. Die Unteransprüche 2 bis 8 beziehen sich auf weitere, vorteilhafte Ausgestaltungen der Verbundetikette.

Die erfindungsgemässe Etikette zum Kennzeichnen einer Compact Disk ist ausgestaltet als eine Verbundetikette umfassend ein flächenförmiges, flexibles Trägermaterial sowie zumindest eine lösbar daran haftende, eine insbesondere kreisförmige Ausnehmung aufweisende Etikette für eine Compact Disk, wobei das Trägermaterial Schnitte oder Sollbruchlinien aufweist, welche in Umfangsrichtung der Etikette zumindest abschnittsweise über einen peripheren Rand der Etikette vorstehend verlaufen.

Die Etikette kann beschriftbar ausgestaltet sein und beispielsweise aus Papier bestehen. Die Etikette ist insbesondere mit einem Ink-Jet-Drucker oder mit einem Laser-Drucker bedruckbar beziehungsweise beschriftbar. Die Oberfläche einer Compact Disk kann auch direkt zum Beispiel mit einem Ink-Jet-Drucker bedruckt werden, wobei die verwendete Farbe üblicherweise wasserlöslich ist. Unter dem Begriff Etikette der erfindungsgemässen Verbundetikette ist somit auch eine transparente Schutzfolie zum Abdecken der Compact Disk Oberfläche zu verstehen, wobei die Schutzfolie insbesondere dazu dient, die wasserlösliche, auf der Compact Disk aufgebrachte Farbe zu schützen. Eine derartige, transparente Folien-Etikette kann sehr dünn oder hochglänzend ausgestaltet sein. Insbesondere bei einer derartigen Etikette ist es von zentraler Bedeutung, dass während des Aufbringens der Etikette auf die Compact Disk keine Berührung mit Fingern einer Bedienungsperson entsteht, was die erfindungsgemässe Verbundetikette problemlos erlaubt.

Ein Vorteil der erfindungsgemässen Verbundetikette ist darin zu sehen, dass das teilweise über den peripheren Rand der Etikette vorstehende Trägermaterial ein einfaches Einlegen der Verbundetikette in die erfindungsgemässe Vorrichtung erlaubt, und das nach dem Einlegen das Trägermaterial einfach ergriffen und von der Etikette abgezogen werden kann, so dass die Verbundetikette in einer definierten Lage von der erfindungsgemässen Vorrichtung gehalten ist und beim Abziehen des Trägermaterials kein Kontakt zwischen der klebrigen Oberfläche der Etikette und den Fingern der Bedienungsperson entsteht.

Eine Vorrichtung zum insbesondere exakt zentrischen Aufbringen einer selbstklebenden Etikette auf einen scheibenförmigen Artikel, insbesondere auf eine Compact Disk, umfasst ein erstes Gehäuseteil mit einer Haltevorrichtung für die Etikette sowie ein zweites Gehäuseteil mit einer Haltevorrichtung für den scheibenförmigen Artikel, wobei die Gehäuseteile beweglich, insbesondere schwenkbar oder translatorisch beweglich miteinander verbunden und von einer Offenstellung in eine Schliessstellung überführbar sind, derart, dass in Schliessstellung die Haltevorrichtungen in einer gegenüberliegend angeordneten Lage positioniert sind, und dass in Schliessstellung zumindest eine der Haltevorrichtungen in Richtung zur gegenüberliegenden Haltevorrichtung beweglich im Gehäuseteil angeordnet ist, um den scheibenförmigen Artikel mit der Etikette in Berührung zu bringen.

Ein Vorteil dieser Vorrichtung ist darin zu sehen, dass in Offenstellung die Compact Disk bequem in einer durch das zweite Gehäuseteil bestimmten Lage einlegbar ist, und dass die selbstklebende Etikette zusammen mit deren Trägerfolie und/oder Greiflappen bequem in einer durch das erste Gehäuseteil bestimmten Lage einlegbar und positionierbar ist. Nach dem Einlegen in das erste Gehäuseteil wird die Trägerfolie von der Etikette abgezogen, wobei die Etikette vom ersten Gehäuseteil sicher gehalten ist, so dass kaum eine Gefahr besteht, dass die Bedienungsperson mit ihren Fingern mit der freiliegenden, klebrigen Oberfläche der Etikette in Berührung kommt. Die beiden Gehäuseteile sind zum Beispiel um eine gemeinsame Achse schwenkbar miteinander verbunden, so dass die Gehäuseteile auf einfache Weise in eine Schliessstellung zusammenklappbar sind, worauf die Compact Disk und die Etikette gegenüberliegend angeordnet und ausgerichtet sind. In dieser Lage wird insbesondere auf das Zentrum des zweiten Gehäuseteils beziehungsweise auf einen dort angeordneten Betätigungsknopf eine zum ersten Gehäuseteil hin ausgerichtete, leichte Kraft ausgeübt, so dass sich die beiden Gehäuseteile beziehungsweise die beiden Haltevorrichtungen annähern und dabei die Compact Disk auf die Etikette zu liegen kommt, und somit die Etikette aufgeklebt wird.

Bei einer solchen Vorrichtung sind die Etikette und die Compact Disk in der Schliessstellung vorzugsweise exakt gegenseitig zentriert angeordnet. Während der Schliessbewegung in die Schliessstellung erfolgt die gegenseitige Zentrierung selbsttätig, so dass die Etikette und die Compact Disk in der Schliessstellung zentriert übereinanderliegend angeordnet sind und nur noch über eine kleine Pressbewegung zur gegenseitigen Berührung gebracht werden müssen. Somit können selbstklebende Etiketten exakt zentrisch auf Compact Disks oder andere scheibenförmige Artikel aufgeklebt werden.

Das gegenseitige Zentrieren der beiden Gehäuseteile beziehungsweise der beiden Haltevorrichtungen weist den weiteren Vorteil auf, dass die erfindungsgemässe Vorrichtung selbst dann, wenn die Bauteile, zum Beispiel auf Grund von Fertigungstoleranzen, leicht unterschiedlich ausgestaltet sind, ein exaktes Zentrieren der Etikette bezüglich der Compact Disk erlauben. Das gegenseitige Zentrieren übt somit auch eine Toleranzausgleichsfunktion aus. Ein Vorteil ist darin zu sehen, dass die Bauteile mit geringeren Toleranzanforderungen und dadurch kostengünstiger herstellbar sind. Auf Grund der geringen Toleranzanforderungen ist die Vorrichtung, bestehend aus mehreren Bauteilen, auch einfach und kostengünstig zusammensetzbar.

Die beiden Gehäuseteile können über eine translatorische und/oder eine rotatorische Bewegung in eine derartige, die Etikette und den scheibenförmigen Artikel gegenseitig zentrierende Lage gebracht werden. Die beiden Gehäuseteile können auch um eine gemeinsame Drehachse gelagert sein.

Das erste Gehäuseteil weist beispielsweise eine ebene Auflagefläche für die Etikette beziehungsweise für die Verbundetikette auf, so dass diese in einem ersten Schritt auf die Auflagefläche aufgelegt und anschliessend die Trägerfolie und/oder die Greiflappen abgezogen werden, so dass die selbstklebende Fläche der Etikette gegen oben zu liegen kommt, ohne dass während des Abziehens der Trägerfolie und/oder der Greiflappen zum Beispiel Fingerabdrücke auf der selbstklebenden Fläche verursacht werden. Da die Finger nicht klebrig werden, ist sichergestellt, dass beim Entnehmen der CD aus dem zweiten Gehäuseteil keine klebrige Fingerabdrücke auf die vom Laser lesbare CD-Fläche übertragen werden, was später ein zuverlässiges Lesen der gespeicherten Information beeinträchtigen würde. In einer weiteren vorteilhaften Ausführungsform weist das erste Gehäuseteil einen Zapfen mit am Umfang verteilt angeordneten Federelementen auf, welche die Etikette entlang des Innenkreises derselben halten, was ein Aufwölben der Etikette verhindert und zudem Masstoleranzen des Innenkreises der Etiketten oder des Zapfens korrigierend aufnimmt. In einer weiteren vorteilhaften Ausführungsform ist der Zapfen schwimmend im ersten Gehäuseteil gehalten und wird während des Zusammenklappens der Gehäuseteile von einem am zweiten Gehäuseteil angeordneten Führungselement zentriert, so dass die Etikette trotz möglicher unterschiedlicher Masstoleranzen der Gehäuseteile und des Zapfens exakt zentriert gegenüberliegend der CD angeordnet wird.

Die Vorrichtung zum Aufbringen einer selbstklebenden Etikette erfordert eine entsprechend angepasst ausgestaltete Verbundetikette, die einerseits leicht beschriftbar bzw. bedruckbar ist, entweder von Hand oder mit einem handelsüblichen Druckmittel wie beispielsweise einem Laserdrucker oder einem Tintenstrahldrucker, und die andererseits auf einfache Weise in die Vorrichtung einlegbar ist und insbesondere eine Berührung der klebrigen Oberfläche der Etikette mit den Fingern ausschliesst.

Die Erfindung wird anhand mehrerer Ausführungsbeispiele im Detail beschrieben. Es zeigen:
- Fig. 1a,1b,1c: eine perspektivische Ansicht einer als beschriftbarer Bogen ausgestalteten Verbundetikette;
- Fig. 1d,: le eine herausgetrennte Etikette;
- Fig. 2a,2b,2c: eine perspektivische Ansicht eines weiteren Ausführungsbeispiels einer als beschriftbarer Bogen ausgestalteten Verbundetikette;
- Fig. 3a,4b: ein weiteres Ausführungsbeispiel einer Verbundetikette.
- Fig. 4: eine Explosionsdarstellung einer Vorrichtung zum Aufbringen einer selbstklebenden Etikette auf einen scheibenförmigen Artikel, insbesondere auf eine Compact Disk;
- Fig. 5: eine perspektivische Ansicht einer Vorrichtung zum Aufbringen einer selbstklebenden Etikette auf eine Compact Disk;
- Fig. 6: einen Längsschnitt durch die Vorrichtung in Schliess- beziehungsweise Verriegelungsstellung;

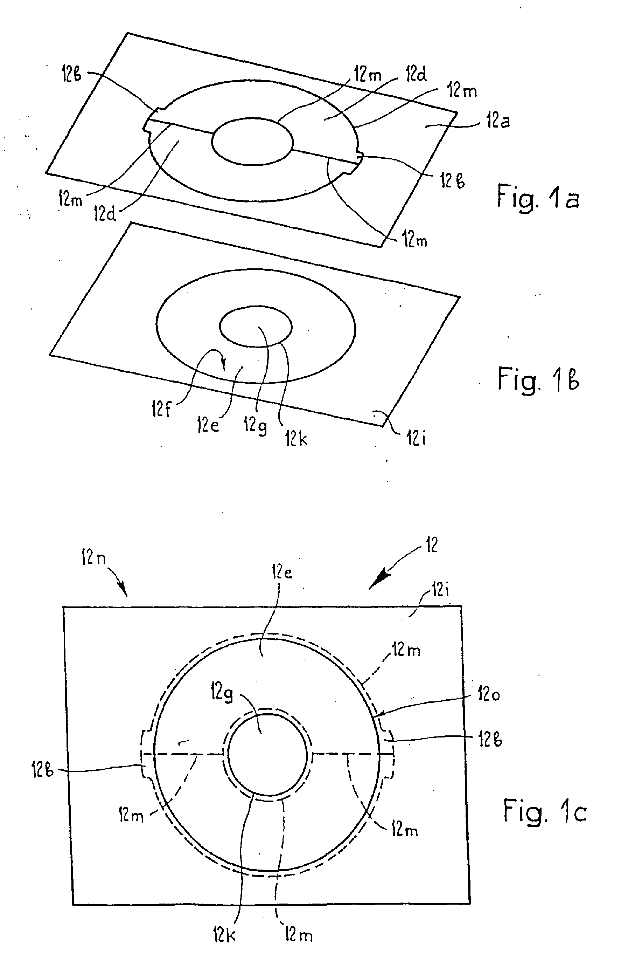

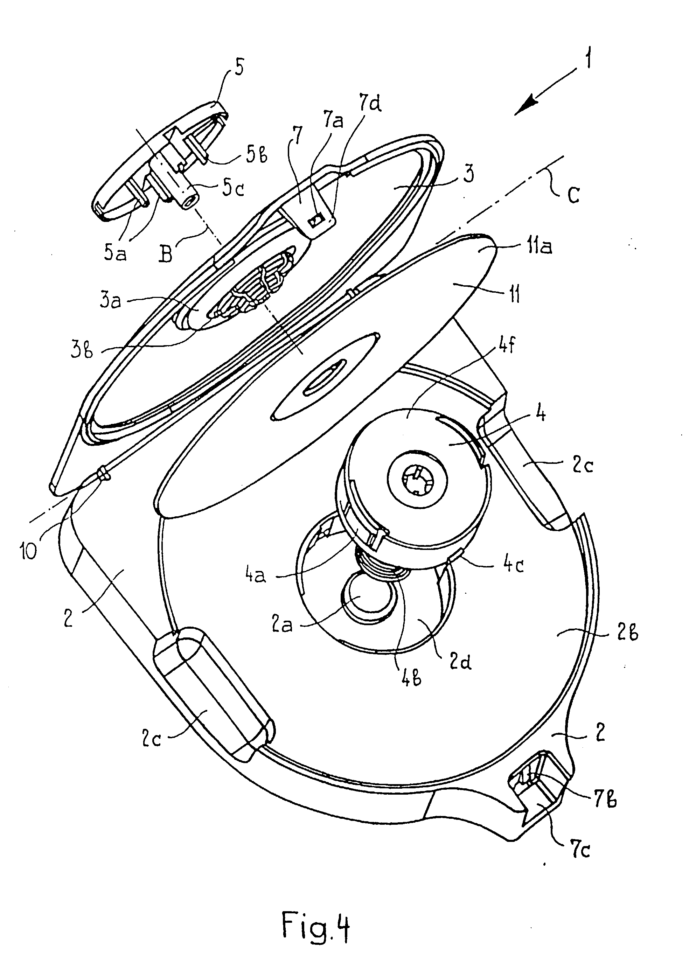

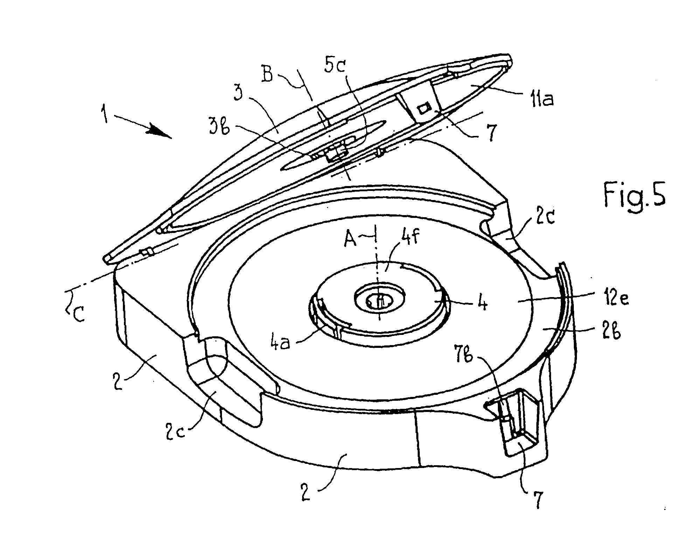

Fig. 1c zeigt eine Aufsicht auf eine als beschriftbarer Bogen 12n ausgestaltete Verbundetikette 12, in welche eine Etikette 12e für eine Compact Disk eingestanzt ist. Die Verbundetikette 12 umfasst ein in Fig. la als Trägerfolie ausgestaltetes Trägermaterial 12a, ein in Fig. 1b dargestelltes, beschriftbares Etikettmaterial 12i und ein nicht dargestelltes, zwischen der Trägerfolie 12a und dem Etikettmaterial 12i gleichmässig flächig verteiltes Klebemittel. Das Etikettmaterial 12i weist die freigestanzte Etikette 12e auf, eine freigestanzte Innenfläche 12g mit einem Innenkreis 12k, sowie zwei gegenüberliegend angeordnete und bezüglich der Etikette 12e anschliessende und in radialer Richtung vorstehende, freigestanzte Greiflappen 12h auf. Zumindest eine Oberfläche 12f der Etikette 12e ist mit einem Druckmittel beschriftbar, wobei das Etikettmaterial 12i sowie das Trägermaterial 12a flächenförmig und flexibel ausgestaltet ist, so dass die Oberfläche über den Aussenkreis 12o der Etikette 12e hinaus beschriftbar ist, um sicherzustellen, dass die gesamte Oberfläche 12f der Etikette 12e beschriftbar ist und keine unbeschrifteten Ränder aufweist. Die flexible Ausgestaltung erlaubt ein Umlenken der Verbundetikette 12, wie dies zum Beispiel in einem Laserdrucker erforderlich ist. Das als Trägerfolie ausgestaltete Trägermaterial 12a ist entsprechend dem Etikettmaterial 12i angepasst ausgestaltet und weist zwei gestanzte Trägerfolienteile bzw. Trägerlappen 12b auf, die durch Schnitte 12 m bis auf jeweils zwei Haltebrücken 12c freigestanzt sind. Diese Schnitte 12m könnten auch nicht durchgehend freigestanzt als Sollbruchlinien 12m ausgestaltet sein, indem diese eine Perforation aufweisen. Der Schnitt 12m bzw. die Sollbruchlinie 12m verläuft dabei abschnittsweise in Umfangsrichtung der Etikette 12e über den Aussenkreis bzw. den peripheren Rand 12o vorstehend. Aus der Aufsicht der Verbundetikette 12 gemäss Fig. lc ist die gegenseitige Anordnung des Etikettmaterials 12i bezüglich des unterhalb angeordneten als Trägerfolie ausgestalteten Trägermaterials 12a ersichtlich. Der strichliert dargestellte Schnitt 12m bzw. die Sollbruchlinie 12m bildet eine umlaufende Begrenzung des Trägerlappens 12b, wobei der aus Etikettmaterial 12i bestehende Greiflappen 12h und der Trägerlappen 12b derart gegenseitig angeordnet sind, dass der Trägerlappen 12b teilweise am Greiflappen 12h und teilweise an der Etikette 12e anliegt. Die strichliert dargestellten Trägerfolienteile 12b verbinden die Etikette 12e mit den Greiflappen 12h, wobei die Kontur des Trägerfolienteils 12b gegenüber dem Greiflappen 12h leicht kleiner ausgestaltet ist, so dass der Aussenrand des Greiflappens 12h an der umgebenden Trägerfolie 12a klebt. Durch diese Ausgestaltung ist sichergestellt, dass beim Bedrucken der Etikette 12e, insbesondere wenn der beschriftbare Bogen 12n in einem Drucker um eine Umlenkrolle geführt wird, sich die Greiflappen 12h nicht ablösen und aufstehen. Eine beschriftete oder bedruckte Etikette 12e wird auf einfache Weise derart aus dem Bogen 12n herausgelöst, dass die Greiflappen 12h beziehungsweise die Trägerfolienteile 12b, bezüglich der Darstellung gemäss Fig. 1c von unten, hochgedrückt werden, worauf die Haltebrücken 12c brechen und die Etikette 12e aus dem Bogen 12n lösbar ist. Die selbstklebende Oberfläche der Etikette 12e liegt somit, mit Ausnahme der Trägerfolienteile 12b, frei und getrennt von der Trägerfolie 12a. Die Etikette 12e wird, beidseitig gehalten an den beiden Greiflappen 12h und mit der Klebeseite nach oben, über einen Zapfen 4f eines ersten Gehäuseteils 2 einer in den Fig. 4 bis 6 dargestellten Vorrichtung 1 zum Etikettieren gestreift und flach auf eine Auflagefläche 2b gelegt. Die Etikette 12e wird derart eingelegt, dass die Greiflappen 12h im Bereich von Ausnehmungen 2c vorstehen und leicht zugänglich sind. Die Greiflappen 12h werden daraufhin auf einfache Weise mit dem verbleibenden Trägerfolienteil 12b durch eine Abkantbewegung von der Etikette 12e gelöst und abgezogen, so dass die Etikette 12e, wie in Fig. 5 dargestellt, mit der beschrifteten Fläche 12f nach unten und der Klebeseite nach oben ausgerichtet in der Vorrichtung 1 liegt. Die Finger haben somit nie Kontakt zur Klebeseite der Etikette 12e gehabt. Jede Etikette 12e ist somit sauber und ohne Spuren von Fingerabdrücken klebbar. Zudem entstehen keine klebrigen Finger, die insbesondere beim Herausnehmen der beschrifteten CD diese beschmutzen könnten, wobei insbesondere die vom Laser lesbare Seite der CD sehr empfindlich bezüglich einer derartigen Verschmutzung ist. Die in den Figuren 4-6 dargestellte Vorrichtung 1 in Kombination mit dem entsprechend angepasst ausgestalteten Bogen 12n mit Verbundetiketten erlaubt somit eine Vielzahl von Compact Disks mit exakt zentriert und sauber angeordneten Etiketten 12e zu beschriften.

In einer besonders vorteilhaften Ausführungsform weist die Verbundetikette 12 gemäss den Figuren la,lb,lc keine Haltebrücken 12c und somit ein bezüglich der Trägerfolie 12a vollständig freigestanztes Trägerfolienteil 12b auf. Das Trägerfolienteil 12b weist somit einen durchgehenden Schnitt 12m auf. Bei einer derart ausgestalteten Verbundetikette 12 lässt sich die Etikette 12e besonders leicht vom Trägermaterial 12a lösen, indem einer der beiden Greiflappen 12h ergriffen und hochgezogen wird. Das am Greiflappen 12h haftende Trägerfolienteil 12b folgt dieser Bewegung und zieht während der nachfolgenden Bewegung die Etikette 12e ab, wobei gegen Ende des Abziehvorganges das gegenüberliegende Trägerfolienteil 12b gelöst und danach der daran haftende Greiflappen 12h abgezogen wird, so dass die von der Trägerfolie 12a losgelöste Etikette 12e, ähnlich wie in Fig. ld,le dargestellt, zum Einlegen in die Etikettiervorrichtung zur Verfügung steht.

Fig. 1e zeigt ein weiteres Ausführungsbeispiel einer aus dem Bogen 12n bzw. der Verbundetikette 12 herausgetrennten Etikette 12e, mit einer Aufsicht auf die Klebeseite 121 und den beiden Trägerfolienteilen 12b, welche die Greiflappen 12h halten. Fig. 1d zeigt eine Aufsicht der Etikette 12e der Verbundetikette 12 gemäss Fig. le mit beschriftbarer Oberfläche 12f und Greiflappen 12h. Die Etikette 12e kann aus einer Vielzahl beschriftbarer Materialien hergestellt sein, insbesondere aus Papier oder einem folienartigen Kunststoff, beispielsweise einer transparenten Folie, oder einer laminierten Metallfolie. Auf die Etikette 12e kann auch ein Sicherheitscode aufgebracht werden, z.B. mit einem Beschriftungsmittel, das nur bei Infrarotlicht sichtbar wird. Dies erlaubt z.B. die Kennzeichnung der Etikette 12e mit einem Gütezeichen eines Herstellers oder ermöglicht speziellen Anwendern einen Originalitätsnachweis. Die Sicherheitscodes können in unterschiedlicher, bereits bekannter Art vorgesehen werden. Die Etikette 12e ist mit Zeichen beschriftbar, kann jedoch auch mit einer Abbildung oder Grafik bedruckt werden, oder mit einer maschinenlesbaren Kennzeichnung wie beispielsweise einem Strichcode versehen werden.

Die Vorrichtung 1 erlaubt zudem, zwischen der Etikette 12e und dem scheibenförmigen Artikel 11, insbesondere der Compact Disk 11a, weitere Gegenstände anzuordnen. Nach dem Einlegen der Etikette 12e auf die Auflagefläche 2b könnte ein weiterer Gegenstand, zum Beispiel ein Magnetstreifen, auf die Klebeseite 121 gelegt werden, und danach die Compact Disk 11a mit der Etikette 12e verklebt werden, so dass der Magnetstreifen zwischen der Etikette 12e und der CD 11a fest verklebt ist. Dieser Magnetstreifen ist vorzugsweise kreisförmig ausgestaltet und ebenfalls zentriert bezüglich der Drehachse der CD angeordnet. Auf einem derartigen Magnetstreifen können zusätzliche Informationen oder zum Beispiel ein Sicherheitscode gespeichert werden.

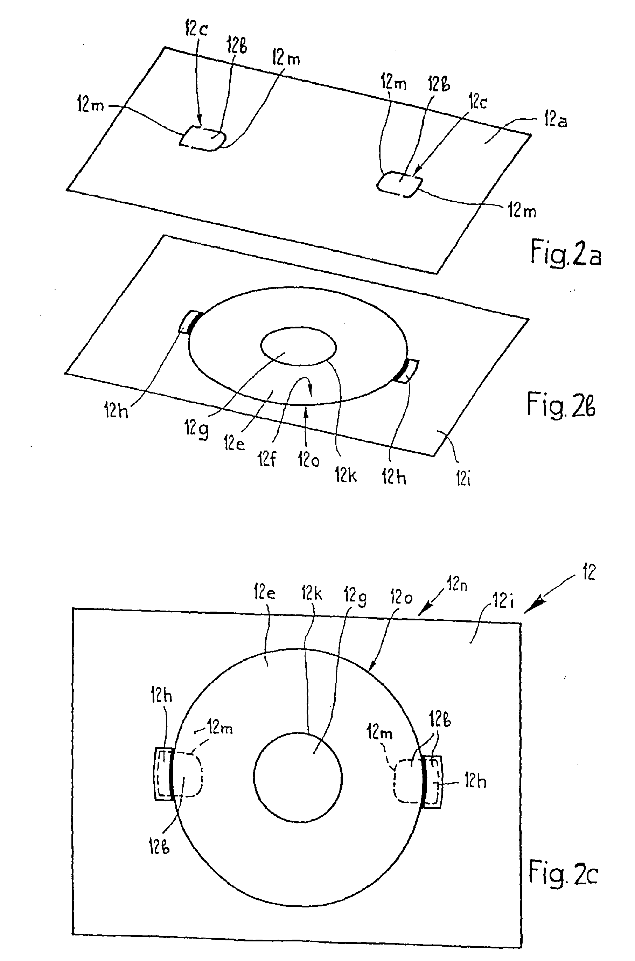

Die Figuren 2a, 2b und 2c zeigen ein weiteres Ausführungsbeispiel einer als beschriftbarer Bogen 12n ausgestalteten Verbundetikette 12. Fig. 2a zeigt das als Trägerfolie ausgestaltete Trägermaterial 12a, welches eine als Schnitt 12m oder Sollbruchlinie 12m ausgeführte Stanzung aufweist, so dass zwei Trägerfolienteile 12d mit vorstehenden Greiflappen 12b ausgestanzt sind. Fig. 2b zeigt das Etikettmaterial 12i, aus dem die Etikette 12e herausgestanzt ist. Fig. 2c zeigt eine Aufsicht der als Bogen 12n ausgestalteten Verbundetikette 12, wie diese für das Bedrucken vorgesehen ist. Die unten liegenden, strichliert dargestellten Schnitte 12m bzw. Sollbruchlinien 12m der Trägerfolie 12d,12a weisen einen leicht grösseren, über den peripheren Rand 12o der Etikette 12e über den gesamten Umfang vorstehenden Radius auf, so dass der beschriftbare Bogen 12n mit Etikette 12e und Trägerfolie 12a sowie Trägerfolienteilen 12d zusammengehalten ist. Nach dem Bedrucken der Etikette 12e wird die Innenfläche 12g herausgedrückt, wobei sowohl der Innenkreis der Trägerfolienteile 12d als auch der Innenkreis 12k der Etikette 12e zum besseren Lösen einen Schnitt 12m bzw. eine als Mikroperforation ausgestaltete Sollbruchlinie 12m aufweisen. Der Innenkreis des Trägerfolienteils 12d sowie der Innenkreis 12k der Etikette 12e können deckungsgleich angeordnet und ausgestaltet sein, oder, wie in Fig. 2c dargestellt einen unterschiedlichen Radius aufweisen. Die Etikette 12e kann gemeinsam mit den Trägerfolienteilen 12d aus dem Bogen 12n herausgelöst und über den Zapfen 4 der Haltevorrichtung 4 der Vorrichtung 1 gestreift und eben verlaufend auf die Auflagefläche 2b aufgelegt werden. Daraufhin wird der vorstehende Trägerfolienteil 12b des einen Trägerfolienteils 12d erfasst und abgezogen und daraufhin der zweite Trägerfolienteil 12d ebenfalls erfasst und abgezogen, so dass die Klebeseite frei liegt und die beiden Gehäuseteile 2,3 in Schliessstellung überführbar sind. Der Bogen 12n kann in einem normierten Format, zum Beispiel im Format A4 oder A5 ausgestaltet sein.

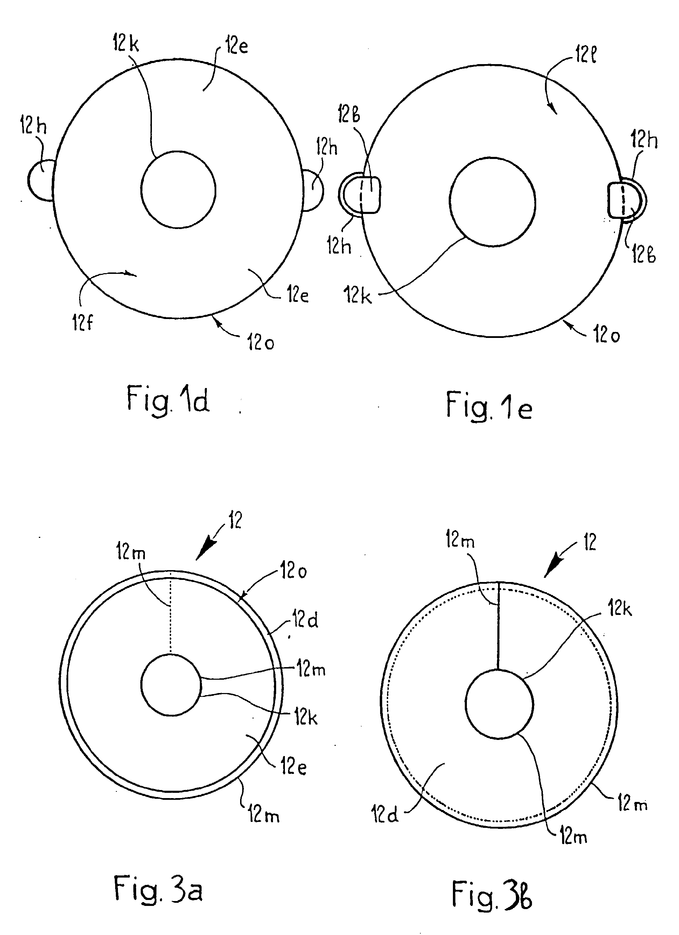

Fig. 3a zeigt eine Aufsicht auf die Etikette 12e eines weiteren Ausführungsbeispieles der Verbundetikette 12. Das als Trägerfolienteil 12d ausgestaltete Trägermaterial weist einen leicht grösseren Radius als die Etikette 12e auf und steht daher bezüglich der Etikette 12e in radialer Richtung leicht vor. Die Schnittlinie 12m verläuft konzentrisch zur Etikette 12e. Das Trägerfolienteil 12d weist einen unten liegenden, und daher strichliert dargestellten, in radialer Richtung verlaufenden Schnitt 12m bzw. Sollbruchlinie 12m auf. Fig. 3b zeigt dieselbe Etikette gemäss Fig. 3a, jedoch als Ansicht auf die Trägerfolie 12d. Die Verbundetikette 12 wird in der Stellung gemäss Fig. 3b über den Zapfen 4f der Haltevorrichtung 4 der Vorrichtung 1 gestreift und auf die Auflagefläche 2b des Zapfens 4f gelegt. Daraufhin wird das in radialer Richtung vorstehende Trägerfolienteil 12d im Bereich des radial verlaufenden Schnittes 12m bzw. der Sollbruchlinie 12m angehoben und mit einer kreisförmigen Handbewegung vollständig von der Etikette 12e gelöst, so dass die Klebeseite frei liegt. In einer bevorzugten Ausgestaltung weist die dargestellte Verbundetikette 12 keine Innenfläche 12g mehr auf, da dieses Zentrumsteil bereits bei der Herstellung vollständig herausgestanzt wird. Die Verbundetikette 12 gemäss Fig. 3a und 3b ist insbesondere geeignet von Hand beschriftet zu werden, um eine Compact Disk, zum Beispiel vergleichbar mit einem Label für eine Computer-Diskette, auf einfache Weise zu beschriften. Die Verbundetikette 12 gemäss Fig. 3a und Fig. 3b könnte auch eine Innenfläche 12g aufweisen, welche beispielsweise durch eine Perforation mit dem Trägerfolienteil 12d verbunden oder über einen Teil der Etikette 12e am Trägerfolienteil 12d gehalten ist.

In einer weiteren Ausführungsform könnte die Verbundetikette 12 gemäss dem Ausführungsbeispiel Fig. la, 1b, 1c mit einem Trägermaterial 12a ohne Schnitte bzw. Sollbruchlinien 12m ausgestaltet sein. Die Greiflappen 12h des Etikettmaterials 12i sind über eine insbesondere perforierte Sollbruchlinie 12m mit der Etikette 12e verbunden. Zum Einlegen der Etikette 12e in die erfindungsgemässe Vorrichtung 1 wird die Etikette 12e mit den daran befestigten Greiflappen 12h vom Trägermaterial 12a gelöst und in die Vorrichtung 1 eingelegt. Danach werden die Greiflappen 12h entlang der Sollbruchlinie 12m abgetrennt.

Die in Fig. 1 und 2 dargestellten Ausführungsbeispiele von Verbundetiketten 12 weisen zumindest einen Greiflappen 12b bzw. 12h, vorzugsweise zwei, bezüglich der Etikette 12e radial gegenüberliegend angeordnete Greiflappen 12b, 12h auf. Das Ausführungsbeispiel gemäss Fig. 3a, 3b könnte ebenfalls zumindest einen fest mit dem Trägermaterial 12d verbundenen, in radialer Richtung vorstehenden Greiflappen 12b bzw. 12h aufweisen.

Fig. 4 zeigt die einzelnen Bestandteile einer Vorrichtung 1 zum exakt zentrischen Aufbringen einer selbstklebenden Etikette auf einen als Compact Disk 11a ausgebildeten scheibenförmigen Artikel 11. Das erste Gehäuseteil 2 ist als ein Gehäuseboden ausgestaltet und weist eine ebene, kreisförmige Auflagefläche 2b für die selbstklebende Etikette 12e, wie in Fig. 2b dargestellt, auf. Im Zentrum dieser Auflagefläche 2b ist eine Absenkung 2d zur Aufnahme einer Haltevorrichtung 4 vorgesehen. Das erste Gehäuseteil 2 weist zwei gegenüberliegend angeordnete Ausnehmungen 2c auf, die einerseits als Eingriff für die Finger einer Bedienungsperson dienen, um die Vorrichtung 1 auf angenehme Weise zu betätigen, und andererseits die Etikette 12e gut zugänglich machen. Die Haltevorrichtung 4 für die Etikette 12e ist im dargestellten Ausführungsbeispiel als ein Zapfen 4f, der an dessen Umfang zwei, vorzugsweise jedoch drei oder mehr angeordnete Federelemente 4a aufweist, welche, wie in Fig. 5 dargestellt, mit dem Innenkreis 12k der Etikette 12e beziehungsweise der Verbundetikette 12 in Wirkverbindung sind.

Der Zapfen 4f ist durch Haltenasen 4c in vertikaler Richtung gleitbar in Führungsöffnungen 2e des ersten Gehäuseteils 2 gehalten, wobei der Zapfen 4f durch eine Spiralfeder 4b, die über einen Nocken 2a zentriert bezüglich der Absenkung 2d gehalten ist, gegen oben vorgespannt gehalten ist. Der Durchmesser der Absenkung 2d ist leicht grösser ausgestaltet als der Aussendurchmesser des Zapfens 4f, so dass dieser frei schwimmend bezüglich einer axial zum Zapfen 4f verlaufenden Richtung als auch bezüglich einer radial zum Zapfen 4f verlaufenden Richtung in der Absenkung 2d des ersten Gehäuseteils 2 gehalten ist. Die Federelemente 4a liegen leicht an der Wand der Absenkung 2d an und werden beim Überziehen der Etikette 12e durch deren Innenkreis 12k leicht nach innen gespannt. Das zweite Gehäuseteil 3 ist über ein Scharnier 10, unter Ausbildung einer gemeinsamen Drehachse C, fest mit dem ersten Gehäuseteil 2 verbunden. Das zweite Gehäuseteil 3 weist eine Haltevorrichtung 3b zum Halten der Compact Disk lla in einer konzentrisch und senkrecht zu einer ersten Achse A verlaufenden Lage auf. Die Haltevorrichtung 3b ist als eine für Compact Disks lla allgemein bekannte Schnappverbindung, bestehend aus acht einzelnen Federbeinen, ausgebildet. Die Haltevorrichtung 3b ist über eine federnde Membrananordnung 3a mit dem restlichen Teil des zweiten Gehäuseteils 3 verbunden. Weiter ist ein Betätigungsmittel 5 mit Federzungen 5a, Haltenasen 5b und einen zylinderförmigen Zentrierzapfen 5c dargestellt. Beide Gehäuseteile 2,3 weisen auf der Drehachse C der gegenüberliegenden Seite Verriegelungsteile 7a,7b auf, nämlich eine Verschlussnase 7b, in welche eine Ausnehmung 7a in einer Verriegelungsstellung eingreift. Diese Verriegelungsstellung wird dadurch bewirkt, dass, wenn die beiden Gehäuseteile 2,3 in der Schliessstellung aufeinanderliegend angeordnet sind, ein Verriegelungsteil 7d manuell leicht zum ersten Gehäuseteil 2 hin gedrückt wird und somit die Verschlussnase 7b mit der Ausnehmung 7a verriegelt. Eine Ausnehmung 7c ist im ersten Gehäuseteil 2 vorgesehen, so dass das Verriegelungsteil 7d mit dem Finger nach aussen gezogen werden kann, um die Verriegelungsstellung wieder aufzulösen.

Fig. 5 zeigt eine weitere perspektivische Ansicht der Vorrichtung. Die Etikette 12e ist mit der Klebeseite nach oben auf der Auflagefläche 2b des ersten Gehäuseteils 2 aufgelegt. Die als Zapfen 4f ausgestaltete Haltevorrichtung 4 spannt mit den Federelementen 4a den Innenkreis 12k der Etikette 12e und nimmt die Masstoleranzen des Innenkreises 12kauf. Die Etikette 12e ist durch den Zapfen 4f konzentrisch und senkrecht bezüglich der ersten Achse A verlaufend gehalten. Der Zapfen 4f ist in zur ersten Achse A radialer Richtung geringfügig beweglich gelagert. Im zweiten Gehäuseteil 3 ist die Compact Disk lla durch die Haltevorrichtung 3b in einer konzentrisch und rechtwinklig verlaufenden Lage bezüglich einer zweiten Achse B gehalten. Während des Drehens des zweiten Gehäuseteils 3, nämlich des Gehäusedeckels, um die Drehachse C werden die beiden Haltevorrichtungen 3b,4 immer näher zusammengeführt, derart, dass die Haltevorrichtungen 3b,4 bei geschlossenem Gehäuseteil 3 in einer gegenüberliegenden Lage angeordnet sind. Diese Lage wird auch als Schliessstellung bezeichnet. Der zweite Gehäuseteil 3 weist einen zylinderförmigen Zentrierzapfen 5c auf, der, wenn der zweite Gehäuseteil 3 beinahe geschlossen ist, in eine Zentrierausnehmung 4g des Zapfens 4f eingreift, wobei der Zapfen 4f gegebenenfalls in zur ersten Achse A radialer Richtung leicht verschoben wird, so dass die Achsen A und B deckungsgleich verlaufen, so dass die CD 11a und die Etikette 12e exakt konzentrisch verlaufend und übereinander ausgerichtet angeordnet sind.

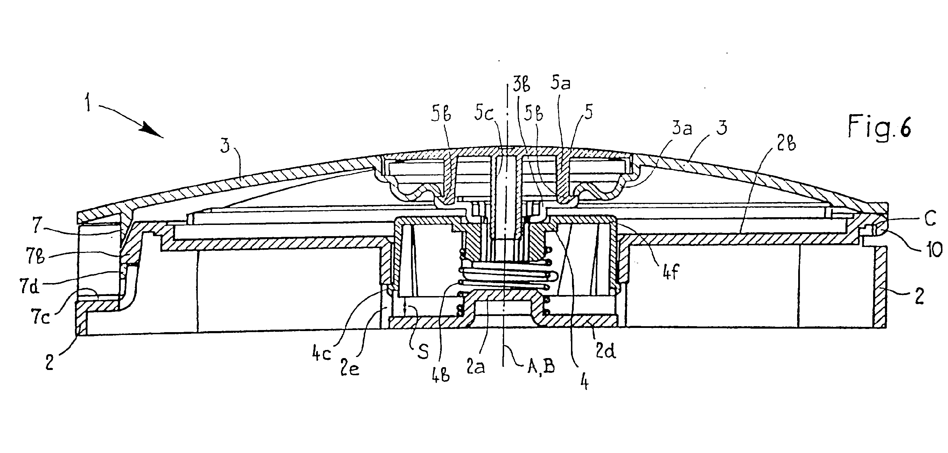

Fig. 6 zeigt einen Längsschnitt durch die Vorrichtung 1 in der Verriegelungsstellung. In dieser Stellung ist das Verriegelungsmittel 7 geschlossen. An Hand von Figur 6 wird jedoch auch die Schliessstellung beschrieben. Die Schliessstellung unterscheidet sich von der Verriegelungsstellung dadurch, dass das Verriegelungsmittel 7 geöffnet ist. Das Verriegelungsmittel 7 ist derart ausgestaltet, dass es in der Schliessstellung nicht selbsttätig verriegelt, sondern geöffnet bleibt, so dass die Vorrichtung 1 aus der Schliessstellung ohne Betätigung des Verriegelungsmittels 7 wieder in eine Offenstellung überführbar ist. Die Vorrichtung 1 kann jedoch aus der Schliessstellung in die Verriegelungsstellung überführt werden, indem das Verriegelungsmittel 7 manuell derart betätigt wird, dass das Verriegelungsmittel 7, wie in Fig. 6 dargestellt, verriegelt. Der besseren Übersichtlichkeit wegen sind in Fig. 6 die innerhalb der Vorrichtung 1 angeordnete CD lla sowie die Etikette 12e nicht dargestellt. Die als Zapfen 4f ausgestaltete Haltevorrichtung 4 weist einen durch die Führungsöffnung 2e bestimmten maximalen Hub S auf. Die federnde Membrananordnung 3a in der Mitte des zweiten Gehäuseteils 3 ist im inneren Bereich mit der Haltevorrichtung 3b, und im äusseren Bereich mit dem gewölbt ausgestalteten Gehäusedeckel 3 verbunden. Das als Knopf ausgestaltete Betätigungsmittel 5 ist in Verlaufsrichtung der zweiten Achse B beweglich im zweiten Gehäuseteil 3 gehalten. Kurz bevor der zweite Gehäuseteil 3 vollständig geschlossen beziehungsweise in der Schliessstellung ist, gelangt der zylinderförmige Zentrierzapfen 5c in die Zentrierausnehmung 4g des Zapfens 4f, so dass die radiale Lage des Zapfens 4f, sofern notwendig, derart korrigiert wird, dass die beiden Achsen A und B einen deckungsgleichen Verlauf einnehmen. Dabei wird die radiale Lage der von der Haltevorrichtung 4 gehaltenen Etikette 12e entsprechend verändert. Der in den Zapfen 4f eindringende Teilabschnitt des zylinderförmigen Zentrierzapfens 5c kann teilweise konisch verlaufend ausgestaltet sein. Nachdem der zweite Gehäuseteil 3 in die Schliessstellung gebracht worden ist, sind die CD und die Etikette 12e immer noch in Verlaufsrichtung der Achsen A und B beabstandet angeordnet. Durch einen leichten Druck auf den Knopf 5 in Verlaufsrichtung der Achsen A und B gleitet dieser in Verlaufsrichtung der Achsen A und B zum ersten Gehäuseteil 2 hin, wobei eine Federspannung aufgebaut wird, die das als Knopf ausgestaltete Betätigungsmittel 5 beim Loslassen wieder in die Ausgangslage zurückgleiten lässt. Durch das Verschieben des Betätigunsmittels 5 in Richtung des ersten Gehäuseteils 2 dringt der zylinderförmige Zentrierzapfen 5c weiter in den Zapfen 4f ein, wobei der Innenrand der Compact Disk lla auf dem Zapfen 4f zur Auflage kommt und während des weiteren Absenkens des Knopfes 5 den Zapfen 4f nach unten drückt, bis die Compact Disk lla flächig auf der auf der Auflagefläche 2b aufliegenden Etikette 12e aufliegt, so dass die Etikette 12e in einer zur Compact Disk lla konzentrischen Lage auf diese geklebt wird. Während dieses Vorganges gleiten auch die beiden am Innenkreis 12k der Etikette 12e anliegenden Federelemente 4a nach unten, so dass die Etikette 12e auch im Bereich des Innenkreises 12k eben auf der Auflagefläche 2b aufliegt, womit gewährleistet ist, dass die Etikette 12e während der Kontaktphase zur CD vollständig eben aufliegt. Die Compact Disk 11a wird somit konzentrisch zur Etikette 12e verlaufend und parallel zur Etikette 12e verlaufend auf diese aufgelegt, so dass die Etikette 12e in der gewünschten, genau definierten, und wiederholbar reproduzierbaren Lage aufgeklebt wird. Nach dem Klebevorgang wird der Knopf 5 losgelassen, worauf dieser auf Grund der Federspannung in die Ausgangslage zurückschnappt. Daraufhin wird der zweite Gehäuseteil 3 in die Offenstellung zurückgeschwenkt, so dass die in der Haltevorrichtung 3b gehaltene Compact Disk lla dieser entnommen werden kann.

## Patentansprüche

1. Verbundetikette (12) zum Kennzeichnen eines scheibenförmigen Artikels, insbesondere einer Compact Disk (11a), umfassend ein flächenförmiges, flexibles Trägermaterial (12a;12d) sowie zumindest eine lösbar daran haftende, eine Ausnehmung (12k) aufweisende Etikette (12e) für eine Compact Disk, wobei das Trägermaterial (12a;12d) Schnitte oder Sollbruchlinien (12m) aufweist, welche in Umfangsrichtung der Etikette (12e) zumindest abschnittsweise über einen peripheren Rand (12o) der Etikette (12e) vorstehend verlaufen.

2. Verbundetikette nach Anspruch 1, dadurch gekennzeichnet, dass die Etikette (12e) einen kreisförmigen peripheren Rand (120) sowie eine dazu konzentrische kreisförmige Ausnehmung (12k) aufweist.

3. Verbundetikette nach Anspruch 1 oder 2, dadurch gekennzeichnet, dass die Verbundetikette (12) als rechteckiger Einzelbogen oder als endlose Rolle ausgestaltet ist, und dass das Trägermaterial (12a;12d) und vorzugsweise auch das die Etikette (12e) umfassende Material (12i) vollflächig ausgestaltet sind.

4. Verbundetikette nach einem der vorangegangenen Ansprüche, dadurch gekennzeichnet, dass das Trägermaterial (12a; 12d) einen vollständig um den peripheren Rand (12o) der Etikette (12e) vorstehend verlaufenden, insbesondere kreisförmigen Schnitt (12m), einen bezüglich der kreisförmigen Ausnehmung (12k) deckungsgleichen oder einen geringfügig grösseren Durchmesser aufweisenden zweiten Schnitt bzw. zweite Sollbruchlinie (12m), sowie zumindest einen zwischen diesen beiden Schnitten bzw. Sollbruchlinien (12m) insbesondere radial verlaufenden Schnitt bzw. Sollbruchlinie (12m) aufweist.

5. Verbundetikette nach einem der vorangegangenen Ansprüche, dadurch gekennzeichnet, dass ausserhalb und anschliessend an den peripheren Rand (120) der Etikette (12e) ein aus Etikettmaterial (12i) bestehender Greiflappen (12h) angeordnet ist, und dass das Trägermaterial (12a;12d) einen durch einen Schnitt oder eine Sollbruchlinie (12m) umlaufend begrenzten Trägerlappen (12b) aufweist, welcher teilweise am Greiflappen (12h) anliegend und teilweise an der Etikette (12e) anliegend angeordnet ist.

6. Verbundetikette nach Anspruch 5, dadurch gekennzeichnet, dass der Trägerlappen (12b) über mindestens einen Steg (12c) eine Verbindung zum Trägermaterial (12a;12d) aufweist.

7. Verbundetikette nach Anspruch 5 oder 6, dadurch gekennzeichnet, dass zwei Greiflappen (12h) und zugeordnete Trägerlappen (12b) in bezüglich der Etikette (12e) radial gegenüberliegender Lage angeordnet sind.

8. Verbundetikette nach einem der vorangegangenen Ansprüche, dadurch gekennzeichnet, dass die Etikette (12e) aus einer transparenten Folie und/oder aus einem beschriftbaren Material, insbesondere aus Papier besteht.

9. Verbundetikette nach einem der vorangegangenen Ansprüche, dadurch gekennzeichnet, dass die Etikette (12e) selbstklebend ist.

10. Verbundetikette nach einem der vorangegangenen Ansprüche, dadurch gekennzeichnet, dass die Verbundetikette als beschriftbarer Bogen (12n) ausgestaltet ist, in welchen die Etikette (12e) eingestanzt ist.
